# EUROPÄISCHE PATENTANMELDUNG

(11) **EP 3 641 231 A1**
(43) Veröffentlichungstag der Anmeldung: **22.04.2020**
(21) Anmeldenummer: 19202199.6
(22) Anmeldetag: 09.10.2019
(51) Int. Cl.: H04L 12/40, H04L 12/26, H04L 12/24, H04L 29/06

(54) **VERFAHREN UND VORRICHTUNG ZUR ÜBERWACHUNG EINER DATENKOMMUNIKATION**

(30) Priorität: 19.10.2018 DE 102018217964
(71) Anmelder: Robert Bosch GmbH, 70442 Stuttgart (DE)
(72) Erfinder: Dang, Liem, 71640 Ludwigsburg (DE); Holle, Jan, 70439 Stuttgart (DE); Gonzalez Fernandez, Mario, 70825 Korntal-Muenchingen (DE); Rambo, Joshua, Wixom, MI, MI Michigan 48393 (US); Herrmann, Benjamin, 71636 Ludwigsburg (DE)

(57) **Zusammenfassung**

Verfahren zur Überwachung einer Datenkommunikation in einem mehrere Teilnehmer aufweisenden Kommunikationssystem, das ein von den Teilnehmern gemeinsam nutzbares Kommunikationsmedium aufweist, wobei das Verfahren die folgenden Schritte aufweist: Ermitteln der Teilnehmer des Kommunikationssystems, Bilden einer ersten Sammlung von möglichen Nachrichten, die durch wenigstens einen der ermittelten Teilnehmer über das Kommunikationsmedium aussendbar sind, Ermitteln von über das Kommunikationsmedium ausgesendeten Nachrichten, Auswerten der ermittelten Nachrichten.

## Beschreibung

### Stand der Technik

Die Offenbarung betrifft ein Verfahren zur Überwachung einer Datenkommunikation in einem mehrere Teilnehmer aufweisenden Kommunikationssystem, das ein von den Teilnehmern gemeinsam nutzbares bzw. geteiltes Kommunikationsmedium (englisch: "shared medium") aufweist.

Die Offenbarung betrifft ferner eine Vorrichtung zur Ausführung eines derartigen Verfahrens.

Verfahren und Vorrichtungen der vorstehend genannten Art sind bekannt, erfordern jedoch i.d.R. aufwendige Spezialhardware bzw. eine aufwendige Signalverarbeitung.

### Offenbarung der Erfindung

Dementsprechend besteht eine Aufgabe der Erfindung darin, ein Verfahren und eine Vorrichtung der eingangs genannten Art dahingehend zu verbessern, dass die genannten Nachteile des Stands der Technik vermindert bzw. vermieden werden.

Bevorzugte Ausführungsformen beziehen sich auf ein Verfahren zur Überwachung einer Datenkommunikation in einem mehrere Teilnehmer aufweisenden Kommunikationssystem, das ein von den Teilnehmern gemeinsam nutzbares (bzw. (insbesondere unter den Teilnehmern) geteiltes) Kommunikationsmedium aufweist, wobei das Verfahren die folgenden Schritte aufweist: Ermitteln der Teilnehmer des Kommunikationssystems, Bilden einer ersten Sammlung, insbesondere z.B. Liste, von möglichen Nachrichten, die durch wenigstens einen der ermittelten Teilnehmer über das Kommunikationsmedium aussendbar sind, Ermitteln von über das Kommunikationsmedium ausgesendeten Nachrichten, Auswerten der ermittelten Nachrichten. Vorteilhaft kann bei der Auswertung der ermittelten Nachrichten, die also tatsächlich über das Kommunikationsmedium ausgesendet worden sind, die erste Sammlung berücksichtigt werden, wodurch ermittelte Nachrichten beispielsweise abgleichbar sind mit der ersten Sammlung. Dadurch ist eine effiziente Überwachung der Datenkommunikation in dem Kommunikationssystem ermöglicht, die insbesondere keine aufwendige Spezialhardware bzw. eine aufwendige Signalverarbeitung erfordert. Vielmehr wird vorteilhaft das durch die erste Sammlung charakterisierte Wissen genutzt, das ggf. bei der Auslegung des Kommunikationssystems vorhanden bzw. dann oder später wenig aufwendig ermittelbar ist.

Unter "Teilnehmer" bzw. "Teilnehmereinrichtung" wird vorliegend jede technische Einrichtung bzw. jedes technische System verstanden, das dazu ausgebildet bzw. geeignet ist, über das (geteilte) Kommunikationsmedium mit anderen Teilnehmern in Datenkommunikation zu treten, also beispielsweise Nachrichten über das Kommunikationsmedium an einen oder mehrere andere Teilnehmer zu senden bzw. von einem oder mehreren anderen Teilnehmern über das Kommunikationsmedium zu empfangen. Sofern das Kommunikationssystem beispielsweise einen CAN-Bus aufweist, kann der genannte Teilnehmer bzw. die Teilnehmereinrichtung beispielsweise einen CAN-Transceiver für die Datenkommunikation über den CAN-Bus aufweisen.

Bei weiteren bevorzugten Ausführungsformen ist vorgesehen, dass das Verfahren weiter die folgenden Schritte aufweist: a) Ermitteln eines Übertragungszustands wenigstens eines ermittelten Teilnehmers, vorzugsweise mehrerer oder aller ermittelten Teilnehmer, b) für den wenigstens einen ermittelten Teilnehmer, vorzugsweise für die mehreren oder alle ermittelten Teilnehmer, Ermitteln einer zweiten Sammlung von möglichen Nachrichten, die durch den wenigstens einen bzw. mehrere, vorzugsweise alle, der ermittelten Teilnehmer über das Kommunikationsmedium aussendbar sind, in Abhängigkeit des jeweiligen Übertragungszustands des betreffenden ermittelten Teilnehmers, wobei insbesondere das Auswerten der ermittelten Nachrichten in Abhängigkeit der zweiten Sammlung ausgeführt wird. Hierdurch ist eine besonders präzise Überwachung der Datenkommunikation ermöglicht.

Bei weiteren bevorzugten Ausführungsformen ist vorgesehen, dass die zweite Sammlung, vorzugsweise wiederholt, aktualisiert wird, wobei insbesondere die zweite Sammlung a) periodisch und/oder b) in Abhängigkeit eines, vorzugsweise aktuellen, Übertragungszustands des wenigstens einen ermittelten Teilnehmers und/oder c) in Abhängigkeit wenigstens einer ermittelten Nachricht aktualisiert wird.

Bei weiteren bevorzugten Ausführungsformen ist vorgesehen, dass das Auswerten umfasst: Überprüfen, ob in den ermittelten Nachrichten wenigstens eine Nachricht enthalten ist, die nicht in der zweiten Sammlung enthalten ist. Dies kann beispielsweise auf einen Manipulationsversuch (z.B. Injektion der Nachricht durch einen Angreifer) hindeuten.

Bei weiteren bevorzugten Ausführungsformen ist vorgesehen, dass das Auswerten der ermittelten Nachrichten umfasst: Ermitteln einer Frequenz der von wenigstens einem bestimmten ermittelten Teilnehmer ausgesendeten Nachrichten (insbesondere Ermitteln der Frequenz von Nachrichten desselben Typs, im Falle von CAN-Bussystemen z.B. Ermittlung einer Frequenz von Nachrichten mit derselben CAN-ID).

Bei weiteren bevorzugten Ausführungsformen ist vorgesehen, dass das Auswerten der ermittelten Nachrichten weiter die folgenden Schritte aufweist: Vergleichen der ermittelten Frequenz mit einer für den bestimmten ermittelten Teilnehmer (und/oder den betreffenden Nachrichtentyp (z.B. CAN-ID)) vorgebeben Frequenz, und optional Einleiten einer Fehlerreaktion dann, wenn die ermittelte Frequenz nicht mit der für den bestimmten ermittelten Teilnehmer (und/oder den betreffenden Nachrichtentyp) vorgebeben Frequenz übereinstimmt.

Bei weiteren bevorzugten Ausführungsformen ist vorgesehen, dass das Auswerten weiter umfasst: Überprüfen, ob die ermittelte Frequenz einen vorgebbaren ersten Schwellwert unterschreitet und/oder einen vorgebbaren zweiten Schwellwert überschreitet und/oder identisch Null ist, und optional Einleiten einer Fehlerreaktion dann, wenn die ermittelte Frequenz den vorgebbaren ersten Schwellwert unterschreitet und/oder den vorgebbaren zweiten Schwellwert überschreitet und/oder identisch Null ist.

Bei weiteren bevorzugten Ausführungsformen kann eine Fehlerreaktion generell z.B. dann eingeleitet werden, wenn eine Sammlung gegen Botschaften bzw. Nachrichten auf dem Netzwerk geprüft wird, und wenn dabei z.B. wenigstens eine Anomalie erkannt wird.

Bei weiteren bevorzugten Ausführungsformen ist vorgesehen, dass das Verfahren die folgenden Schritte aufweist: Prüfen, ob in den ermittelten Nachrichten alle von einem bestimmten Teilnehmer aussendbaren Nachrichten enthalten sind, Schließen auf einen Manipulationsversuch, sofern nicht alle von dem bestimmten Teilnehmer aussendbaren Nachrichten in den ermittelten Nachrichten enthalten sind, insbesondere Schließen auf einen Manipulationsversuch, sofern nicht alle von dem bestimmten Teilnehmer aussendbaren Nachrichten innerhalb einer vorgebbaren Wartezeit in den ermittelten Nachrichten enthalten sind. Die vorgebbare Wartezeit kann bei weiteren bevorzugten Ausführungsformen mittels eines Zeitgebers (Timer) überwacht werden.

Bei weiteren bevorzugten Ausführungsformen ist vorgesehen, dass das Verfahren die folgenden Schritte aufweist: Prüfen, ob in den ermittelten Nachrichten von einem bestimmten Teilnehmer aussendbare Nachrichten enthalten sind, Schließen auf einen Manipulationsversuch, sofern manche, aber nicht alle von dem bestimmten Teilnehmer aussendbaren Nachrichten in den ermittelten Nachrichten enthalten sind. Dies ermöglicht vorteilhaft z.B. ein Abgleichen von wirklich auftretenden Botschaften bzw. Nachrichten mit erwarteten Botschaften bzw. Nachrichten pro Teilnehmer. Bleiben z.B. alle Botschaften eines Teilnehmers aus, deutet dies auf dessen kompletten Ausfall hin. Bleibt nur ein Teil an Botschaften eines Teilnehmers aus, deutet dies auf eine Attacke (Masquerade) hin.

Weitere bevorzugte Ausführungsformen beziehen sich auf eine Vorrichtung zur Überwachung einer Datenkommunikation in einem mehrere Teilnehmer aufweisenden Kommunikationssystem, das ein von den Teilnehmern gemeinsam nutzbares Kommunikationsmedium aufweist, wobei die Vorrichtung zur Ausführung der folgenden Schritte ausgebildet ist: Ermitteln der Teilnehmer des Kommunikationssystems, Bilden einer ersten Sammlung von möglichen Nachrichten, die durch wenigstens einen der ermittelten Teilnehmer über das Kommunikationsmedium aussendbar sind, Ermitteln von über das Kommunikationsmedium ausgesendeten Nachrichten, Auswerten der ermittelten Nachrichten.

Bei weiteren bevorzugten Ausführungsformen ist vorgesehen, dass die Vorrichtung zur Ausführung des Verfahrens gemäß den Ausführungsformen ausgebildet ist.

Weitere bevorzugte Ausführungsformen beziehen sich auf einen Teilnehmer bzw. eine Teilnehmereinrichtung (z.B. CAN-Transceiver, im Falle eines CAN-Bussystems) für ein Kommunikationssystem, das ein von mehreren Teilnehmern gemeinsam nutzbares geteiltes Kommunikationsmedium aufweist, wobei der Teilnehmer wenigstens eine Vorrichtung gemäß den Ausführungsformen aufweist.

Weitere bevorzugte Ausführungsformen beziehen sich auf ein Kommunikationssystem, das ein von mehreren Teilnehmern gemeinsam nutzbares (geteiltes) Kommunikationsmedium aufweist und wenigstens einen Teilnehmer gemäß den Ausführungsformen und/oder wenigstens eine Vorrichtung gemäß den Ausführungsformen, wobei insbesondere das Kommunikationssystem als CAN (controller area network)-System oder CAN-FD (flexible data rate)-System ausgebildet ist.

Weitere bevorzugte Ausführungsformen beziehen sich auf eine Verwendung des Verfahrens gemäß den Ausführungsformen und/oder der Vorrichtung gemäß den Ausführungsformen und/oder des Teilnehmers gemäß den Ausführungsformen und/oder des Kommunikationssystems gemäß den Ausführungsformen zur Überprüfung des Kommunikationssystems auf einen Fehler und/oder auf eine Manipulation wenigstens eines Teilnehmers hin.

Weitere vorteilhafte Ausgestaltungen sind Gegenstand der Unteransprüche.

Das Prinzip gemäß den Ausführungsformen ermöglicht vorteilhaft, ohne die Vorsehung zusätzlicher Hardware, insbesondere Spezialhardware, Manipulationen des Kommunikationssystems bzw. wenigstens eines Teilnehmers effizient zu erkennen. Insbesondere können hierdurch sogenannte man-in-the-middle-Angriffe und/oder masquerading-Angriffe erkannt werden.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Schutzansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein vereinfachtes Blockdiagramm eines Kommunikationssystems gemäß einer Ausführungsform,
- Figur 2A: schematisch ein vereinfachtes Flussdiagramm eines Verfahrens gemäß einer Ausführungsform,
- Figur 2B: schematisch ein vereinfachtes Flussdiagramm eines Verfahrens gemäß einer weiteren Ausführungsform,
- Figur 2C: schematisch ein vereinfachtes Flussdiagramm eines Verfahrens gemäß einer weiteren Ausführungsform,
- Figur 2D: schematisch ein vereinfachtes Flussdiagramm eines Verfahrens gemäß einer weiteren Ausführungsform,
- Figur 2E: schematisch ein vereinfachtes Flussdiagramm eines Verfahrens gemäß einer weiteren Ausführungsform,
- Figur 3: schematisch ein vereinfachtes Blockschaltbild einer Vorrichtung gemäß einer Ausführungsform,
- Figur 4: schematisch ein vereinfachtes Flussdiagramm eines Verfahrens gemäß einer weiteren Ausführungsform,
- Figur 5: schematisch ein vereinfachtes Flussdiagramm eines Verfahrens gemäß einer weiteren Ausführungsform,
- Figur 6: schematisch ein vereinfachtes Flussdiagramm eines Verfahrens gemäß einer weiteren Ausführungsform, und
- Figur 7: schematisch ein vereinfachtes Flussdiagramm eines Verfahrens gemäß einer weiteren Ausführungsform.

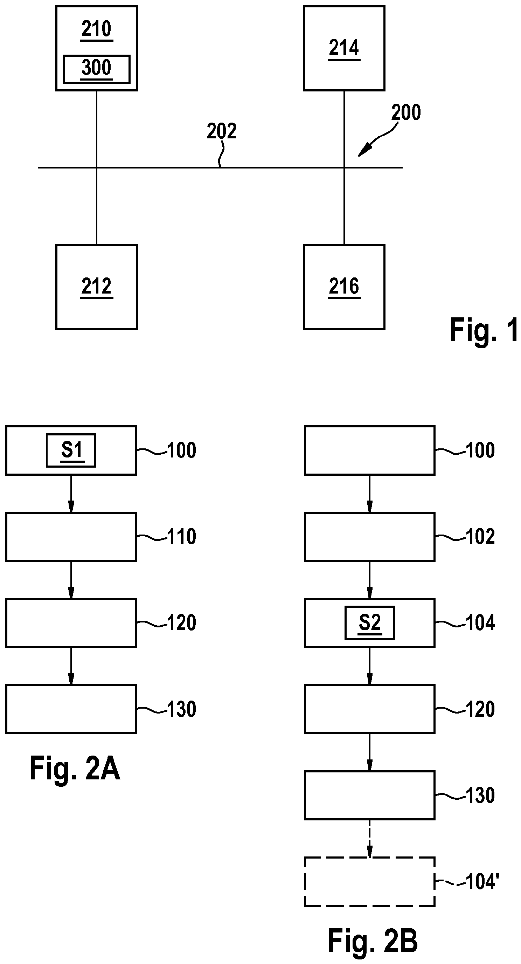

Figur 1 zeigt schematisch ein vereinfachtes Blockdiagramm eines Kommunikationssystems 200 gemäß einer Ausführungsform. Das Kommunikationssystem 200 weist ein geteiltes (also von mehreren Teilnehmern nutzbares) Kommunikationsmedium ("shared medium") 202 auf, über das mehrere Teilnehmer 210, 212, 214, 216 des Kommunikationssystems 200 miteinander in Datenkommunikation treten können (beispielsweise Senden und/oder Empfangen von Nachrichten über das Kommunikationsmedium 202). Beispielsweise kann das Kommunikationssystem 200 als CAN- oder CAN-FD-System ausgebildet sein. Dementsprechend repräsentiert das Kommunikationsmedium 202 beispielhaft einen CAN-Bus, und die Teilnehmer 210, 212, 214, 216 sind dazu ausgebildet, miteinander über den CAN-Bus zu kommunizieren.

Bei besonders bevorzugten Ausführungsformen ist ein Verfahren zur Überwachung der Datenkommunikation in dem Kommunikationssystem 200 vorgesehen. Figur 2A zeigt hierzu schematisch ein vereinfachtes Flussdiagramm einer Ausführungsform des Verfahrens. In einem ersten Schritt 100 werden (insbesondere berechtigte) Teilnehmer 210, 212, 214, 216 des Kommunikationssystems 200 ermittelt. Dies dient beispielsweise dazu, festzustellen, welche Teilnehmer vorhanden sind, und von welchen Teilnehmern dementsprechend ausgesendeten Nachrichten im Rahmen der zu überwachenden Datenkommunikation zu erwarten sind. In einem nachfolgenden Schritt 110 wird eine erste Sammlung S1 von möglichen Nachrichten, die durch wenigstens einen der Teilnehmer 210, 212, 214, 216 über das Kommunikationsmedium 202 aussendbar sind, gebildet, z.B. in Form einer Liste oder Tabelle oder dergleichen. In dem nachfolgenden Schritt 120 werden über das Kommunikationsmedium 202 ausgesendete Nachrichten ermittelt, und in Schritt 130 werden die ermittelten Nachrichten ausgewertet. Bei besonders bevorzugten Ausführungsformen kann die Auswertung gemäß Schritt 130 unter Berücksichtigung der ersten Sammlung S1 erfolgen.

Bei weiteren bevorzugten Ausführungsformen kann die erste Sammlung S1 beispielsweise eine sogenannte Positivliste bzw. "Whitelist" darstellen, also eine Liste aller möglicher Nachrichten, die durch wenigstens einen der ermittelten berechtigten Teilnehmer über das Kommunikationsmedium 202 aussendbar sind. Sofern dann beispielsweise in Schritt 130 festgestellt wird, dass die in Schritt 120 ermittelten Nachrichten wenigstens eine Nachricht enthalten, die nicht in der ersten Sammlung S1 enthalten ist, kann auf eine Manipulation des Kommunikationssystems 200 bzw. wenigstens eines Teilnehmers geschlossen werden.

Mit anderen Worten kann bei der Auswertung 130 der ermittelten Nachrichten, die also tatsächlich über das Kommunikationsmedium 202 ausgesendet worden sind, die erste Sammlung S1 berücksichtigt werden, wodurch ermittelte Nachrichten beispielsweise abgleichbar sind mit der ersten Sammlung S1. Dadurch ist eine effiziente Überwachung der Datenkommunikation in dem Kommunikationssystem 200 ermöglicht, die insbesondere keine aufwendige Spezialhardware bzw. eine aufwendige Signalverarbeitung erfordert. Vielmehr wird vorteilhaft das durch die erste Sammlung S1 charakterisierte Wissen genutzt, das ggf. bei der Auslegung des Kommunikationssystems 200 vorhanden bzw. dann oder später wenig aufwendig ermittelbar ist.

Bei besonders bevorzugten Ausführungsformen ist eine Vorrichtung 300, die zur Ausführung des Verfahrens gemäß den Ausführungsformen ausgebildet ist, in wenigstens einen der Teilnehmer 210 integriert. Vorliegend ist dies schematisch in Figur 1 für den ersten Teilnehmer 210 angedeutet.

Bei weiteren bevorzugten Ausführungsformen kann das Ermitteln der Teilnehmer gemäß Schritt 100 aus Figur 2A beispielsweise durch eine Beobachtung der Kommunikation auf dem Kommunikationsmedium 202 erfolgen, wobei die Beobachtung vorzugsweise in einer solchen Betriebsphase des Kommunikationssystems 200 erfolgt, in der davon ausgegangen werden kann, dass gerade keine Manipulation ausgeführt wird bzw. vorliegt. Alternativ oder ergänzend kann das Ermitteln der Teilnehmer gemäß Schritt 100 aus Figur 2A auch beispielsweise mittels einer Konfiguration vorgenommen werden, in der der Vorrichtung 300 die berechtigten Teilnehmer vorgegeben werden.

Unter Teilnehmer bzw. Teilnehmereinrichtung wird vorliegend jede technische Einrichtung bzw. jedes technische System verstanden, das dazu ausgebildet bzw. geeignet ist, über das geteilte Kommunikationsmedium 202 mit anderen Teilnehmern in Datenkommunikation zu treten, also beispielsweise Nachrichten über das Kommunikationsmedium 202 an einen oder mehrere andere Teilnehmer zu senden bzw. von einem oder mehreren anderen Teilnehmern über das Kommunikationsmedium 202 zu empfangen. Sofern das Kommunikationssystem 200 beispielsweise, wie vorliegend unter Bezugnahme auf Figur 1 der Fall, einen CAN-Bus aufweist, kann der genannte Teilnehmer bzw. die Teilnehmereinrichtung beispielsweise einen CAN-Transceiver für die Datenkommunikation über den CAN-Bus aufweisen. In entsprechender Weise können die genannten Nachrichten daher beispielsweise anhand ihrer CAN-ID unterschieden werden.

Bei weiteren bevorzugten Ausführungsformen ist vorgesehen, dass das Verfahren weiter die folgenden Schritte aufweist: Ermitteln eines Übertragungszustands wenigstens eines ermittelten Teilnehmers, vorzugsweise mehrerer oder aller ermittelten Teilnehmer, und dann, für den wenigstens einen ermittelten Teilnehmer, vorzugsweise für die mehreren oder alle ermittelten Teilnehmer, Ermitteln einer zweiten Sammlung S2 von möglichen Nachrichten, die durch den wenigstens einen bzw. mehrere, vorzugsweise alle, der ermittelten Teilnehmer über das Kommunikationsmedium aussendbar sind, in Abhängigkeit des jeweiligen Übertragungszustands des betreffenden ermittelten Teilnehmers, wobei insbesondere das Auswerten der ermittelten Nachrichten in Abhängigkeit der zweiten Sammlung S2 ausgeführt wird. Hierdurch ist eine besonders präzise Überwachung der Datenkommunikation ermöglicht. Die vorstehend genannte Ausführungsform bzw. einzelne Schritte hieraus können bei weiteren bevorzugten Ausführungsformen vorteilhaft auch mit der vorstehend unter Bezugnahme auf Figur 2A beschriebenen Ausführungsform kombiniert werden.

Dies ist beispielhaft in dem vereinfachten Flussdiagramm gemäß Figur 2B illustriert. In Schritt 100 werden zunächst die Teilnehmer des Kommunikationssystems 200 ermittelt, in Schritt 102 erfolgt ein Ermitteln eines Übertragungszustands wenigstens eines ermittelten Teilnehmers, vorzugsweise mehrerer bzw. aller ermittelten Teilnehmer 210, 212, 214, 216, in Schritt 104 erfolgt ein Ermitteln der zweiten Sammlung S2 von möglichen Nachrichten, die durch die ermittelten Teilnehmer 210, 212, 214, 216 über das Kommunikationsmedium 202 aussendbar sind, in Abhängigkeit des jeweiligen Übertragungszustands des betreffenden ermittelten Teilnehmers 210, 212, 214, 216, in Schritt 120 erfolgt ein Ermitteln von über das Kommunikationsmedium 202 ausgesendeten Nachrichten, in Schritt 130 erfolgt ein Auswerten der in Schritt 120 ermittelten Nachrichten, wobei insbesondere das Auswerten 130 der ermittelten Nachrichten bei der Ausführungsform gemäß Figur 2B das Auswerten der ermittelten Nachrichten in Abhängigkeit der zweiten Sammlung S2 vorsieht. Dadurch können vorteilhaft die in Schritt 120 ermittelten Nachrichten mit der zweiten Sammlung S2 abgeglichen werden. Da die zweite Sammlung S2 im Unterschied zu der vorstehend bereits beschriebenen ersten Sammlung S1 zusätzlich jeweilige Übertragungszustände der betreffenden ermittelten Teilnehmer 210, 212, 214, 216 berücksichtigt, weist sie dementsprechend spezifischere Informationen über momentan zulässige auszusendende Nachrichten auf als die erste Sammlung S1. Dementsprechend kann unter Verwendung der zweiten Sammlung S2 eine noch genauere Überprüfung des Kommunikationssystems 200 auf Manipulationen erfolgen.

Die zweite Sammlung S2 kann bei weiteren Ausführungsformen auch als übertragungszustandsspezifische bzw. "selektive" Whitelist bezeichnet werden, weil sie nur solche Nachrichten enthält, die von entsprechenden berechtigten Teilnehmern unter Berücksichtigung ihres jeweiligen aktuellen Übertragungszustands ausgesendet werden können, nicht jedoch beispielsweise andere Nachrichten, welche zwar durch einen berechtigten Teilnehmer prinzipiell aussendbar sind, wobei ein momentanes Aussenden dieser anderen Nachrichten aufgrund des aktuellen Übertragungszustands des betreffenden Teilnehmers jedoch ausgeschlossen ist.

Beispielsweise kann bei weiteren Ausführungsformen die erste Sammlung S1 für einen betrachteten Teilnehmer vier (CAN-)Botschaften enthalten, z.B. mit den CAN-IDs 0x222, 0x560, 0x276 und 0x223, wohingegen die in einem aktuellen Übertragungszustand gebildete zweite Sammlung S2 für den betrachteten Teilnehmer nur drei (CAN-)Botschaften aufweist, und zwar mit den CAN-IDs 0x222, 0x560 und 0x276. Wird nun z.B. (auch noch) eine weiter CAN-Botschaft mit der CAN-ID 0x223 empfangen, so wird vorteilhaft eine Manipulation erkannt.

Beispielsweise kann bei weiteren Ausführungsformen die zweite Sammlung S2 für den Teilnehmer 212 insgesamt drei Nachrichten enthalten, und zwar eine erste CAN-Botschaft mit der ersten CAN-ID 0x222, eine zweite CAN-Botschaft mit der zweiten CAN-ID 0x560, und eine dritte CAN-Botschaft mit der dritten CAN-ID 0x276. Diese drei CAN-Botschaften können demnach bei dem aktuellen Übertragungszustand des Teilnehmers 212 über das Kommunikationsmedium 202 gesendet werden. Sofern beispielsweise der Schritt der Auswertung 130 (Fig. 2B) ergibt, dass unter den in Schritt 120 ermittelten Nachrichten eine CAN-Botschaft mit der CAN-ID 0x223 enthalten ist, kann dementsprechend auf eine Manipulation des Kommunikationssystems 200 bzw. des Teilnehmers 212 geschlossen werden.

Bei weiteren bevorzugten Ausführungsformen ist vorgesehen, dass die zweite Sammlung S2, vorzugsweise wiederholt, aktualisiert wird, vgl. den optionalen Schritt 104' aus Fig. 2B, wobei insbesondere die zweite Sammlung S2 a) periodisch und/oder b) in Abhängigkeit eines, vorzugsweise aktuellen, Übertragungszustands des wenigstens einen ermittelten Teilnehmers und/oder c) in Abhängigkeit wenigstens einer ermittelten Nachricht (z.B. aus Schritt 120) aktualisiert wird. Dadurch ist sichergestellt, dass der Bestand an aktuell zulässigen Nachrichten der Sammlung S2 stets aktuell ist, wodurch eine besonders genaue Überwachung erfolgen kann.

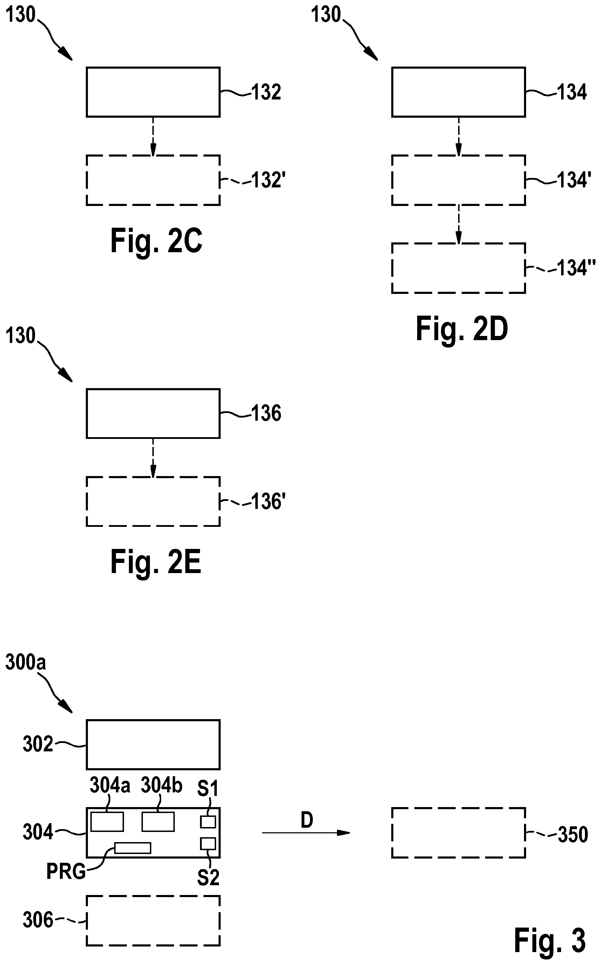

Bei weiteren bevorzugten Ausführungsformen ist vorgesehen, dass das Auswerten 130 (Fig. 2B, 2C) umfasst: Überprüfen 132 (Fig. 2C), ob in den (in Schritt 120) ermittelten Nachrichten wenigstens eine Nachricht enthalten ist, die nicht in der zweiten Sammlung S2 enthalten ist. In diesem Fall kann beispielsweise eine Fehlerreaktion 132' eingeleitet werden, beispielsweise die Signalisierung eines irregulären Zustands bzw. eines Verdachts auf einen Manipulationsversuch an eine weitere Einheit, beispielsweise einen weiteren oder aller weiteren Teilnehmer des Kommunikationssystems 200, und/oder an eine externe Einheit 350 (Fig. 3).

Bei weiteren bevorzugten Ausführungsformen, vgl. Fig. 2D, ist vorgesehen, dass das Auswerten 130 der ermittelten Nachrichten umfasst: Ermitteln 134 einer Frequenz der von wenigstens einem bestimmten ermittelten Teilnehmer 214 (Fig. 1) ausgesendeten Nachrichten. Bei weiteren bevorzugten Ausführungsformen ist vorgesehen, dass das Auswerten 130 der ermittelten Nachrichten weiter die folgenden Schritte aufweist: Vergleichen 134' der ermittelten Frequenz mit einer für den bestimmten ermittelten Teilnehmer 214 vorgebeben Frequenz, und optional Einleiten 134" einer Fehlerreaktion dann, wenn die ermittelte Frequenz nicht mit der für den bestimmten ermittelten Teilnehmer 214 vorgebeben Frequenz übereinstimmt. Besonders bevorzugt kann bei weiteren Ausführungsformen die vorstehend beschriebene Ermittlung 134 der Frequenz und die weitere Auswertung gemäß Figur 2D kombiniert werden mit den Ausführungsformen gemäß Figur 2A und/oder 2B und/oder 2C.

Bei weiteren bevorzugten Ausführungsformen, vgl. Fig. 2E, ist vorgesehen, dass das Auswerten 130 weiter umfasst: Überprüfen 136, ob die ermittelte Frequenz einen vorgebbaren ersten Schwellwert unterschreitet und/oder einen vorgebbaren zweiten Schwellwert überschreitet und/oder identisch Null ist, und optional Einleiten einer Fehlerreaktion 136' dann, wenn die ermittelte Frequenz den vorgebbaren ersten Schwellwert unterschreitet und/oder den vorgebbaren zweiten Schwellwert überschreitet und/oder identisch Null ist. Dadurch können vorteilhaft ebenfalls Manipulationsversuche präzise ermittelt werden, beispielsweise - bei einem vollständigen Ausbleiben von in der ersten und/oder zweiten Sammlung S1, S2 enthaltenen Nachrichten eines betreffenden Teilnehmers - das Deaktivieren eines an sich berechtigten Teilnehmers durch einen Angreifer und/oder sonstige Maßnahmen eines Angreifers, die sich auf eine Frequenz der von dem berechtigten Teilnehmer ausgesendeten Nachrichten auswirken.

Figur 3 zeigt schematisch ein vereinfachtes Blockschaltbild einer Vorrichtung 300a gemäß einer Ausführungsform, die zur Ausführung wenigstens eines Verfahrens zur Überwachung der Datenkommunikation in dem Kommunikationssystem 200 gemäß den Ausführungsformen ausgebildet ist. Beispielsweise kann die Vorrichtung 300 gemäß Figur 1 die Konfiguration 300a gemäß Figur 3 aufweisen. Die Vorrichtung 300a weist eine Recheneinheit 302 auf, die beispielsweise einen Mikroprozessor und/oder digitalen Signalprozessor (DSP) und/oder Mikrocontroller und/oder einen anwendungsspezifischen integrierten Schaltkreis (ASIC) und/oder einen programmierbaren Logikbaustein, insbesondere FPGA (field programmable gate array), oder dergleichen bzw. eine Kombination hieraus aufweist. Die Vorrichtung 300a weist ferner eine Speichereinheit 304 auf, die bevorzugt einen flüchtigen Speicher 304a, insbesondere Arbeitsspeicher (RAM) und/oder einen nichtflüchtigen Speicher 304b, insbesondere Flash-EEPROM, aufweist. Die Speichereinheit 304 ist dazu ausgebildet, zumindest zeitweise bei der Ausführung des Verfahrens gemäß den Ausführungsformen verarbeitete Daten zu speichern, beispielsweise Daten der ermittelten Teilnehmer 210, .., 216 und/oder Daten der ersten Sammlung S1 und/oder Daten der zweiten Sammlung S2 und/oder ermittelte Nachrichten und/oder Daten, welche für die Auswertung 130 verwendet werden oder die während der Auswertung 130 erhalten werden.

Besonders bevorzugt ist die Speichereinheit 304 auch dazu ausgebildet, wenigstens ein Computerprogramm PRG zumindest zeitweise zu speichern, wobei das Computerprogramm PRG dazu ausgebildet ist, durch die Recheneinheit 302 ausgeführt zu werden und auf diese Weise beispielsweise ein Verfahren gemäß den Ausführungsformen in der Vorrichtung 300a zu implementieren.

Bei weiteren bevorzugten Ausführungsformen kann die Vorrichtung 300a auch über eine optionale Kommunikationsschnittstelle 306 verfügen, die beispielsweise ein Senden und/oder Empfangen von Nachrichten über das Kommunikationsmedium 202 ermöglicht. Bei weiteren bevorzugten Ausführungsformen kann die Kommunikationsschnittstelle 306 optional auch dazu ausgebildet sein, zusätzlich zu der Datenkommunikation bezüglich des Kommunikationsmediums 202 eine Datenkommunikation der Vorrichtung 300a mit einer anderen, insbesondere bezüglich des Kommunikationssystems 200 externen, Einheit 350 zu ermöglichen, an die beispielsweise die vorstehend beschriebenen Fehlerreaktionen oder daraus abgeleitete Daten D gesendet werden können.

Weitere bevorzugte Ausführungsformen beziehen sich auf einen Teilnehmer 210, 212, 214, 216 bzw. eine Teilnehmereinrichtung für das Kommunikationssystem 200. Bevorzugt können ein oder mehrere Vorrichtungen 300, 300a gemäß den Ausführungsformen in wenigstens einem Teilnehmer 210, 212, 214, 216 des Kommunikationssystems 200 vorgesehen sein, sodass eine umfassende und insbesondere auch gegenseitige Überwachung durch die Teilnehmer 210, 212, 214, 216 basierend auf dem Prinzip gemäß den Ausführungsformen ermöglicht ist.

Weitere bevorzugte Ausführungsformen beziehen sich auf ein Kommunikationssystem 200, das ein von mehreren Teilnehmern gemeinsam nutzbares (also unter den Teilnehmern geteiltes) Kommunikationsmedium 202 aufweist und wenigstens einen Teilnehmer 210 gemäß den Ausführungsformen und/oder wenigstens eine Vorrichtung 300, 300a gemäß den Ausführungsformen, wobei insbesondere das Kommunikationssystem als CAN (controller area network)-System oder CAN-FD (flexible data rate)-System ausgebildet ist. Bei weiteren bevorzugten Ausführungsformen kann das Kommunikationssystem 200 auch nach einem anderen Kommunikationsstandard als dem vorstehend beispielhaft genannten CAN- oder CAN-FD-Standard arbeiten. Bei weiteren bevorzugten Ausführungsformen ist auch denkbar, wenigstens eine Vorrichtung 300, 300a gemäß den Ausführungsformen in dem Kommunikationssystem 200 vorzusehen, wobei es bei weiteren Ausführungsformen möglich ist, die wenigstens eine Vorrichtung 300, 300a - in Abweichung zu der beispielhaft in Figur 1 gezeigten Konfiguration - außerhalb eines Teilnehmers anzuordnen, beispielsweise als separate externe Vorrichtung, welche mit dem Kommunikationsmedium 202 verbunden ist.

Weitere bevorzugte Ausführungsformen beziehen sich auf eine Verwendung des Verfahrens gemäß den Ausführungsformen und/oder der Vorrichtung 300, 300a gemäß den Ausführungsformen und/oder des Teilnehmers 210, 212, 214, 216 gemäß den Ausführungsformen und/oder des Kommunikationssystems 200 gemäß den Ausführungsformen zur Überprüfung des Kommunikationssystems 200 auf einen Fehler und/oder auf eine Manipulation insbesondere wenigstens eines Teilnehmers hin.

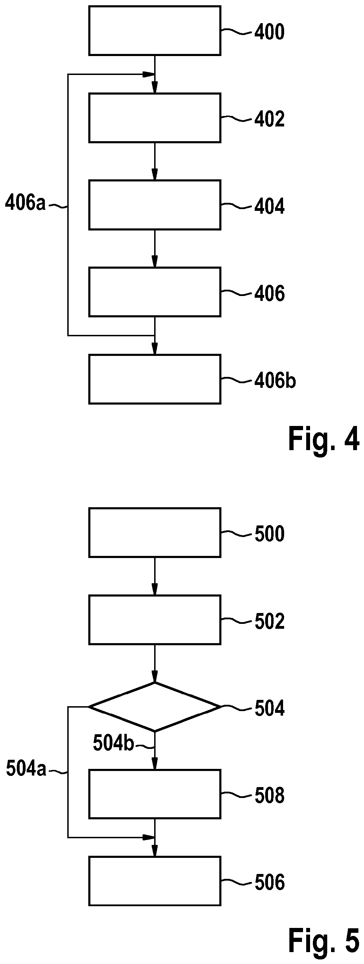

Nachstehend sind unter Bezugnahme auf die Flussdiagramme gemäß Figur 4, 5, 6, 7 weitere vorteilhafte Ausführungsformen beschrieben.

Figur 4 zeigt schematisch einen Ablauf gemäß weiterer bevorzugter Ausführungsformen, bei dem ein Übertragungszustand ermittelt und die zweite Sammlung S2, die als "selektive Whitelist" betrachtet werden kann, aktualisiert wird, vergleiche auch die vorstehend unter Bezugnahme auf Schritt 104' von Figur 2B beschriebene Ausführungsform. In Schritt 400 gemäß Figur 4 beginnt die Ermittlung des Übertragungszustands wenigstens eines Teilnehmers 210. In Schritt 402 wird, beispielsweise durch die Vorrichtung 300 (Figur 3), die Datenkommunikation auf dem Kommunikationsmedium 202 ausgewertet.

Optional werden in Schritt 402 auch Sensorinformationen beispielsweise der Vorrichtung 300 ausgewertet. Bei weiteren bevorzugten Ausführungsformen kann z.B. ein Übertragungszustand wie z.B. "Power Management" durch eine Analyse des Netzwerks ermittelt werden (z.B. mittels Auswertung von Botschaftsinhalten) und/oder durch andere Information, die die Vorrichtung 300 z.B. durch den Teilnehmer 210 erlangen kann, z.B. durch intern verfügbare Informationen, die über ein ADC (Analog/Digital-Wandler) Eingang von dem Kommunikationssystem 200 eingelesen wurden.

Sodann werden in Schritt 404 für jeden Teilnehmer 210, 212, 214, 216 des Kommunikationssystems 200 die betreffenden Übertragungszustände ermittelt. Bei weiteren bevorzugten Ausführungsformen kann in Schritt 404 wenigstens eines der folgenden Elemente zur Ermittlung des Übertragungszustands eines jeweiligen Teilnehmers berücksichtigt werden:
1. Energiemanagement ("Power Management") bzw. Betrachtung unterschiedlicher Betriebszustände, insbesondere Energiesparzustände, von Teilnehmern. Beispielsweise können manche Teilnehmer abgeschaltet sein, während gleichzeitig andere Teilnehmer des Kommunikationssystems angeschaltet sind und aktiv an der Datenkommunikation über das Kommunikationssystem teilnehmen. Bei Anwendungen im Kraftfahrzeugbereich trifft dies beispielsweise auf solche Teilnehmer bzw. die Teilnehmer enthaltenden Steuergeräte zu, die beispielsweise nur dann aktiv sind, wenn die Zündung des Kraftfahrzeugs eingeschaltet ist. Ersichtlich wird ein Teilnehmer, der momentan deaktiviert ist, keine Nachrichten über das Kommunikationssystem aussenden.
2. Netzwerkmanagement, teilweise Abschaltung von Netzwerksegmenten bzw. von Segmenten des Kommunikationssystems 200 ("partial networking"). Bei weiteren Ausführungsformen ist es möglich, den Übertragungszustand eines Teilnehmers zu steuern, beispielsweise mittels Nachrichten, die von einem anderen Teilnehmer an den betreffenden Teilnehmer gesendet werden. Die Steuerung kann beispielsweise ein temporäres Deaktivieren des betreffenden Teilnehmers zum Gegenstand haben bzw. den Teilnehmer dazu veranlassen, einen oder manche vorgebbaren Nachrichten nicht mehr oder für einen vorgebbaren Zeitraum nicht mehr auszusenden und dergleichen.
3. Diagnosebefehle ("diagnostic commands"): unter Anwendung von Diagnoseprotokollen bzw. Diagnosebefehlen ist es möglich, einen Übertragungszustand eines betreffenden Teilnehmers zu steuern, beispielsweise indem er in einen vorgebbaren Betriebszustand bzw. Systemzustand versetzt wird, beispielsweise durch Aktivieren eines Bootloaders, in welchem vorgebbaren Betriebszustand bzw. Systemzustand nicht alle oder zumindest vorübergehend gar keine Nachrichten mehr von dem betreffenden Teilnehmer gesendet werden. Bei weiteren Ausführungsformen kann hierbei ein Dienst zur Kommunikationssteuerung gemäß ISO 14229 verwendet werden, beispielsweise um bestimmte von einem betreffenden Teilnehmer auszusendende Nachrichten zumindest zeitweise zu aktivieren bzw. zu deaktivieren.

Die bei weiteren Ausführungsformen mögliche Berücksichtigung eines oder mehrerer der vorstehend genannten Aspekte bei der Ermittlung des Übertragungszustands eines betreffenden Teilnehmers ermöglicht eine besonders präzise Überwachung der Datenkommunikation in dem Kommunikationssystem 200. Besonders bevorzugt werden bei weiteren Ausführungsformen die Übertragungszustände aller Teilnehmer des Kommunikationssystems 200 in entsprechender Weise, insbesondere unter Berücksichtigung wenigstens eines der vorstehend genannten Aspekte 1., 2., 3. oder wenigstens von Teilen hiervon, ermittelt.

Schließlich wird bei dem Verfahren gemäß Figur 4 in Schritt 406 die selektive Whitelist, beispielsweise in Form der zweiten Sammlung S2 basierend auf den in den Schritten 402, 404 ermittelten Informationen und gegebenenfalls weiteren Informationen gebildet bzw. aktualisiert, sofern sie bereits zuvor gebildet worden ist (oder, weiteren Ausführungsform zufolge, bereits mittels Konfiguration vorgegeben worden ist). Bei weiteren bevorzugten Ausführungsformen können beispielswese auch Konfigurationsinformationen für wenigstens einen Teilnehmer des Kommunikationssystems für die Bildung der selektiven Whitelist bzw. zweiten Sammlung S2 herangezogen werden. Ein Beispiel hierfür ist für das vorliegend genutzte Beispiel des CAN-Bussystems, vorkonfigurierte CAN-Matrizen der jeweiligen Teilnehmer für die Ermittlung der zweiten Sammlung S2 mit einzubeziehen, die Informationen darüber repräsentieren, welche Nachricht (beispielsweise mit welcher CAN-ID) von welchem Teilnehmer zu welchem Zeitpunkt bzw. mit welcher Frequenz gesendet werden soll.

Bei weiteren bevorzugten Ausführungsformen kann für die Ermittlung der zweiten Sammlung S2 auch berücksichtigt werden, wann die durch die Konfiguration (z.B. CAN-Matrizen) definierten Nachrichten gesendet werden, insbesondere in Abhängigkeit von welchem Übertragungszustand des betreffenden Teilnehmers.

Bei der Ermittlung der zweiten Sammlung S2 können bei weiteren bevorzugten Ausführungsformen vorteilhaft auch Kommunikationsbeziehungen zwischen mehreren Teilnehmern 210, 212 berücksichtigt werden. Beispielsweise können ein oder mehrere mögliche Übertragungszustände eines ersten Teilnehmers durch ein oder mehrere mögliche Übertragungszustände eines zweiten Teilnehmers bzw. durch von dem zweiten Teilnehmer gesendete oder nicht gesendete Nachrichten beeinflusst werden. Diese Wechselwirkung kann bei der Bildung der zweiten Sammlung S2 ebenfalls vorteilhaft berücksichtigt werden, wodurch auch komplexe Anwendungsszenarien abbildbar sind, wie beispielsweise eine Weiterleitung von Nachrichten unter mehreren Teilnehmern des Kommunikationssystems 200 oder zwischen verschiedenen Kommunikationssystemen bzw. Netzwerken. Durch die vorstehend beschriebene Berücksichtigung dieser Wechselwirkung kann eine noch präzisere

Überwachung der Datenkommunikation in dem Kommunikationssystem 200 ausgeführt werden.

Bei weiteren bevorzugten Ausführungsformen des Verfahrens gemäß Figur 4 wird nach der Ausführung des Schritts 406 erneut zu Schritt 402 verzweigt, vergleiche den Pfeil 406a, sodass die vorstehend genannten Abläufe 402, 404, 406 wiederholt werden. Besonders bevorzugt werden diese Abläufe fortlaufend oder zumindest zeitweise periodisch wiederholt, um jederzeit korrekte Informationen in der selektiven Whitelist (entspricht der zweiten Sammlung S2) vorhalten zu können. Insbesondere kann hierdurch auch kurzfristigen beziehungsweise dynamischen (während des Betriebs des Kommunikationssystems 200 bzw. eines Teilnehmers eintretenden) Änderungen eines Übertragungszustands Rechnung getragen werden.

Bei weiteren Ausführungsformen ist auch möglich, nach dem Schritt 406 direkt in den Schritt 406b zu verzweigen, der ein Ende der Ermittlung bzw. Aktualisierung des Übertragungszustands charakterisiert.

Nachstehend ist unter Bezugnahme auf das Flussdiagramm gemäß Figur 5 beispielhaft die Erkennung von masquerade-Angriffen gemäß weiteren bevorzugten Ausführungsformen beschrieben. In Schritt 500 beginnt das Verfahren. In Schritt 502 wird die Datenkommunikation auf dem Kommunikationsmedium 202 (also die auf dem Kommunikationsmedium 202 ausgesendeten Nachrichten) ermittelt, und in dem nachfolgenden Schritt 504 wird überprüft, ob eine betrachtete Nachricht der zuvor in Schritt 502 ermittelten Nachrichten in der selektiven Whitelist, also in der zweiten Sammlung S2, enthalten ist. Falls ja wird zu Schritt 506 (Ende) verzweigt, vergleiche den Pfeil 504a. Falls nein wird aus Schritt 504 mittels dem Pfeil 504b zu dem Schritt 508 verzweigt, indem auf das Vorliegen eines masquerade-Angriffs geschlossen wird und eine entsprechende Fehlerreaktion eingeleitet wird (zum Beispiel Signalisierung D eines erkannten Manipulationsversuchs an eine externe Einheit 350 (Fig. 3)). Hierbei liegt die Überlegung zugrunde, dass eine ermittelte Nachricht, sofern sie nicht in der zweiten Sammlung S2 enthalten ist, von einem unberechtigten Angreifer in das Kommunikationsmedium 202 eingeschleust worden ist. Insoweit entspricht Schritt 508 gemäß Figur 5 beispielsweise Schritt 132' gemäß Figur 2C.

Bei weiteren bevorzugten Ausführungsformen umfassen die Schritte 502, 504 gemäß Figur 5 die Ermittlung jeder über das Kommunikationsmedium 202 gesendeten Nachricht und Überprüfung jeder der ermittelten Nachrichten auf ihr Vorhandensein in der selektiven Whitelist S2 hin.

Bei weiteren bevorzugten Ausführungsformen kann das Prinzip gemäß den vorstehend beschriebenen Ausführungsformen, insbesondere die Verwendung der selektiven Whitelist bzw. der zweiten Sammlung S2 vorteilhaft dazu verwendet werden, andere Verfahren zur Überwachung der Datenkommunikation in dem Kommunikationssystem zu ergänzen bzw. zu verbessern, die gegebenenfalls gleichzeitig zu den vorstehend beschriebenen Verfahren ausgeführt werden, und die insbesondere auf einem Vorhandensein von Nachrichten bzw. einer Frequenz, mit der Nachrichten von einem betreffenden Teilnehmer ausgesendet werden, basieren. Ebenfalls anwendbar ist das genannte Prinzip auf weitere Verfahren, welche die Ermittlung eines Zeitablaufs ("Time-out") bei der Datenkommunikation über das Kommunikationssystem 200 nutzen und/oder auf Verfahren welche eine ordnungsgemäße Weiterleitung von Nachrichten bzw. deren Verletzung ("routing violation") überwachen.

Insbesondere kann das Prinzip gemäß den Ausführungsformen, basierend auf der Verwendung der selektiven Whitelist bzw. der zweiten Sammlung S2, gemäß weiteren vorteilhaften Ausführungsformen dazu verwendet werden, eine false-positive Rate der genannten anderen Verfahren zu verringern. Die genannten anderen Verfahren tendieren Untersuchungen der Anmelderin nämlich dazu, false-positive Meldungen zu erzeugen insbesondere in solchen Übertragungszuständen von betrachteten Teilnehmern des Kommunikationssystems 200, in denen eine Übertragung bestimmter Nachrichten vollständig deaktiviert ist. Unter Berücksichtigung der zweiten Sammlung S2 gemäß den Ausführungsformen kann die Anzahl der false-positive Meldungen der genannten anderen Verfahren vorteilhaft reduziert werden, beispielsweise durch eine zumindest zeitweise Deaktivierung der anderen Verfahren für vorgebbare Zeiträume und/oder zur Unterdrückung solcher false-positive Meldungen.

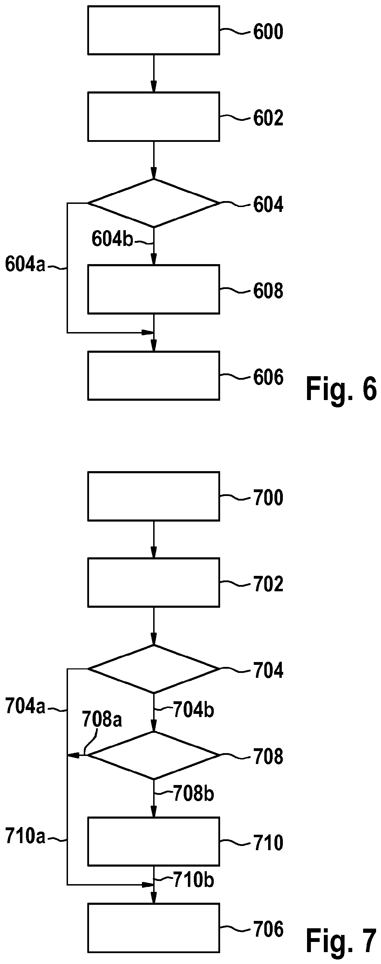

Nachstehend sind daher unter Bezugnahme auf das Flussdiagramm gemäß Figur 6 beispielhaft Aspekte weiterer Ausführungsformen beschrieben, die die vorstehend genannten Nachteile der anderen Verfahren adressieren. Das beispielhaft anhand von Figur 6 beschriebenen Verfahren beginnt mit dem Schritt 600. In Schritt 602 erfolgt eine Ausführung wenigstens eines der anderen Verfahren (beispielsweise eines Überwachungsverfahrens, dass eine Überwachung in Abhängigkeit der Frequenz einer bestimmten Nachricht eines Teilnehmers ausführt). In Schritt 604 wird überprüft, ob ein durch das andere Verfahren in Schritt 602 gegebenenfalls erzeugter Bericht bzw. eine Meldung sich auf eine gemäß dem Prinzip der Ausführungsformen ermittelte Nachricht (vergleiche beispielsweise Schritt 120 aus Figur 2A) bezieht, die auch in der zweiten Sammlung S2 (selektive Whitelist) enthalten ist. Wenn dies der Fall ist, vergleiche Pfeil 604a, wird zu Schritt 606 verzweigt, der ein Ende des Verfahrens definiert. Ist dies jedoch nicht der Fall, d. h. der Bericht bzw. die Meldung aus Schritt 602 bezieht sich auf eine Nachricht, die nicht in der selektiven Whitelist S2 enthalten ist, so wird aus Schritt 604 mittels Pfeil 604b zu dem Schritt 608 verzweigt, in dem die Meldung bzw. der Bericht aus Schritt 602 unterdrückt wird, wodurch insbesondere eine unerwünschte false-positive Meldung vermieden wird. Sodann wird aus Schritt 608 zu Schritt 606 (Ende) verzweigt. Es ist aus Figur 6 zu erkennen, dass die Meldung bzw. ein Bericht des anderen Verfahrens, wie in Schritt 602 gebildet, insbesondere dann nicht unterdrückt wird, vergleiche Pfeil 604a, wenn er sich auf eine in der selektiven Whitelist S2 enthaltene Nachricht bezieht.

Nachfolgend sind unter Bezugnahme auf das vereinfachte Flussdiagramm gemäß Figur 7 Aspekte weiterer bevorzugter Ausführungsformen beschrieben, die sich auf das Feststellen einer Nichtverfügbarkeit eines Teilnehmers des Kommunikationssystems 200 beziehen. Das Verfahren beginnt mit Schritt 700. In dem optionalen Schritt 702 erfolgt die Ausführung eines Verfahrens, wie es vorstehend beispielhaft unter Bezugnahme auf Schritt 602 gemäß Figur 6 beschrieben worden ist. Alternativ kann das Verfahren nach Figur 7 auch mit Schritt 704 beginnen, also ohne die Ausführung von Schritt 702. In Schritt 704 wird geprüft, ob unter den ermittelten Nachrichten (vergleiche Schritt 120 aus Fig. 2A) alle von einem bestimmten Teilnehmer aussendbaren Nachrichten enthalten sind. Falls ja, wird mittels Pfeil 704a zu Schritt 706 verzweigt, in dem das Verfahren beendet wird. In diesem Fall wird darauf geschlossen, dass alle erwarteten Nachrichten des betrachteten bestimmten Teilnehmers mindestens jeweils einmal aufgetreten sind, mithin kein Manipulationsversuch vorliegt. Sofern Schritt 704 jedoch ergibt, dass wenigstens eine von dem bestimmten Teilnehmer aussendbaren Nachrichten nicht in den ermittelten Nachrichten enthalten ist, wird bevorzugt mittels Pfeil 704b zu Schritt 708 verzweigt, in dem geprüft wird, ob ein Schwellwert für einen Zeitablauf ("Time-out") bezüglich des Erhalts der betreffenden Nachricht erreicht worden ist. Falls nein, vergleiche Pfeil 708a, wird ebenfalls zu Block 706 verzweigt. Falls doch, vergleiche Pfeil 708b, wird zu Schritt 710 verzweigt, in dem auf das Vorhandensein eines Manipulationsversuchs bzw. Angriffs, insbesondere eines masquerade-Angriffs, geschlossen wird, und in dem gegebenenfalls optional eine Fehlerreaktion ausgelöst wird. Hierbei kann nämlich darauf geschlossen werden, dass es einem Angreifer gelungen ist, den bestimmten Teilnehmer zu manipulieren, beispielsweise ihn zumindest zeitweise zu deaktivieren, beispielsweise um originär von dem bestimmten Teilnehmer auszusendenden Nachrichten zu fälschen. Sodann verzweigt das Verfahren ebenfalls zu dem Endblock 706 (Pfeil 710b).

Bei weiteren bevorzugten Ausführungsformen kann in Schritt 704 optional die zweite Sammlung S2 berücksichtigt werden bei der Prüfung, was die Präzision bei der Überwachung weiter steigert.

Bei weiteren bevorzugten Ausführungsformen ist vorgesehen, dass das Verfahren die folgenden Schritte aufweist: Prüfen, ob in den ermittelten Nachrichten von einem bestimmten Teilnehmer aussendbare Nachrichten enthalten sind, Schließen auf einen Manipulationsversuch, sofern manche, aber nicht alle von dem bestimmten Teilnehmer aussendbaren Nachrichten in den ermittelten Nachrichten enthalten sind. Dies ermöglicht vorteilhaft z.B. ein Abgleichen von wirklich auftretenden Botschaften bzw. Nachrichten mit erwarteten Botschaften bzw. Nachrichten pro Teilnehmer. Bleiben z.B. alle Botschaften eines Teilnehmers aus, deutet dies auf dessen kompletten Ausfall hin. Bleibt nur ein Teil an Botschaften eines Teilnehmers aus, deutet dies auf eine Attacke (Masquerade) hin. Bei weiteren bevorzugten Ausführungsformen können auch hierbei optional Informationen der zweiten Sammlung S2 berücksichtigt werden bei der Prüfung, was die Präzision bei der Überwachung weiter steigert.

Bei weiteren besonders bevorzugten Ausführungsformen wird das Prinzip gemäß den Ausführungsformen in Echtzeit angewandt, es wird also eine in Echtzeit erfolgende Datenkommunikation des Kommunikationssystems 200 überwacht. Alternativ oder ergänzend kann das Prinzip gemäß den Ausführungsformen auch für eine forensische Analyse einer Kommunikation genutzt werden, wobei die entsprechenden Informationen, die auszuwerten sind, beispielsweise in Form von einem oder mehreren Logfiles eines Kommunikationssystems oder wenigstens eines Teilnehmers vorliegen.

Bezugnehmend auf das schematische Blockdiagramm gemäß Figur 1 sind bei weiteren bevorzugten Ausführungsformen beispielsweise folgende Anwendungsszenarien denkbar. Für die nachfolgende Beschreibung wird beispielhaft davon ausgegangen, dass die Teilnehmer 210, 212, 214, 216 jeweils Steuergeräten eines Kraftfahrzeugs zugeordnet sind, und dass das Kommunikationssystem 200 ein Kommunikationssystem des Kraftfahrzeugs ist, beispielsweise ein CAN-Bus. Für die nachfolgende Beschreibung wird weiter davon ausgegangen, dass der Teilnehmer 216 Ziel eines geplanten masquerade-Angriffs ist, während das Prinzip gemäß den Ausführungsformen beispielhaft durch die in den Teilnehmer 210 integrierte Vorrichtung 300 angewandt wird. Bei dem vorliegenden Beispiel wird weiter davon ausgegangen, dass der Angreifer den Teilnehmer 214 manipuliert, insbesondere dazu verwendet, um Nachrichten in das Kommunikationssystem 200 zu injizieren, die üblicherweise durch den anderen Teilnehmer 216 gesendet werden, und dies in solchen Übertragungszuständen, in denen der andere Teilnehmer 216, beispielsweise aufgrund seiner möglichen Übertragungszustände, derartige Nachrichten nicht senden würde. Grund hierfür kann beispielsweise ein regulärer Übertragungszustand des Teilnehmers 216 sein, indem er keine bzw. nicht die entsprechenden Nachrichten sendet, und/oder ein Angriff mittels des weiteren Teilnehmers 214.

Die vorstehend unter Bezugnahme auf Figur 2A bis Figur 7 beschriebenen Verfahren bzw. Varianten beziehungsweise Kombinationen hieraus können vorteilhaft durch die Vorrichtung 300 ausgeführt bzw. genutzt werden, um den masquerade-Angriff durch den Teilnehmer 214 zu erkennen.

Das Prinzip gemäß den Ausführungsformen ermöglicht vorteilhaft, ohne die Vorsehung zusätzlicher Hardware, insbesondere Spezialhardware, Manipulationen des Kommunikationssystems bzw. wenigstens eines Teilnehmers effizient zu erkennen. Insbesondere können hierdurch sogenannte man-in-the-middle-Angriffe und/oder masquerading-Angriffe erkannt werden. Da das Prinzip gemäß den Ausführungsformen auf der Betrachtung ermittelter Nachrichten und der Auswertung dieser Nachrichten beruht, und nicht etwa auf bestimmten physikalischen Eigenschaften eines oder mehrerer Teilnehmer, kann unter Anwendung des Prinzips gemäß den Ausführungsformen eine besonders geringe false-positive-Rate erzielt werden, also eine besonders geringe Anzahl von fälschlicherweise als Manipulationsversuch gewerteten regulären Ereignissen. Besonders bevorzugt kann das Prinzip gemäß den Ausführungsformen in einem Kommunikationssystem eines Fahrzeugs, insbesondere Kraftfahrzeugs angewendet werden, ist aber nicht auf dieses Gebiet beschränkt. Ferner kann das Prinzip gemäß den Ausführungsformen mit anderen Verfahren zur Überwachung der Datenkommunikation in einem Kommunikationssystem kombiniert werden, wodurch sich gegebenenfalls eine weitere Steigerung der Präzision bzw. Zuverlässigkeit ergibt, beispielsweise durch die Möglichkeit einer Plausibilisierung der jeweiligen Ergebnisse der beiden Verfahren.

Vorteilhaft können bei weiteren Ausführungsformen ermittelte Nachrichten unter Verwendung der ersten Sammlung S1 und/oder der zweiten Sammlung S2 ausgewertet bzw. bewertet werden, wobei beispielsweise folgende Kategorien denkbar sind: erwartete Nachrichten, unerwartete Nachrichten, erwartete, aber ausbleibende Nachrichten. Hierdurch ist eine besonders präzise und detaillierte Überwachung der Datenkommunikation in dem Kommunikationssystem 200 ermöglicht. Bei weiteren bevorzugten Ausführungsformen ist zudem die Abwesenheit von erwarteten Nachrichten bzw. eine Frequenz von Nachrichten berücksichtigbar, wodurch weitere Anomalien bei der Datenkommunikation ermittelt werden können. Aus derartigen Anomalien kann weiteren Ausführungsformen zufolge auf Angriffe bzw. Manipulationen des Kommunikationssystems 200 bzw. wenigstens eines Teilnehmers 210, .., 216 geschlossen werden. Besonders vorteilhaft kann dann auf Manipulationen geschlossen werden, wenn gemäß den betrachteten Übertragungszuständen nur manche von allen möglichen durch einen Teilnehmer auszusendenden Nachrichten ausgesendet bzw. ermittelt werden.

## Patentansprüche

1. Verfahren zur Überwachung einer Datenkommunikation in einem mehrere Teilnehmer (210, 212, 214, 216) aufweisenden Kommunikationssystem (200), das ein von den Teilnehmern (210, 212, 214, 216) gemeinsam nutzbares Kommunikationsmedium (202) aufweist, wobei das Verfahren die folgenden Schritte aufweist: Ermitteln (100) der Teilnehmer (210, 212, 214, 216) des Kommunikationssystems (200), Bilden (110) einer ersten Sammlung (S1) von möglichen Nachrichten, die durch wenigstens einen der ermittelten Teilnehmer (210, 212, 214, 216) über das Kommunikationsmedium (202) aussendbar sind, Ermitteln (120) von über das Kommunikationsmedium (202) ausgesendeten Nachrichten, Auswerten (130) der ermittelten Nachrichten.

2. Verfahren nach Anspruch 1, weiter aufweisend die folgenden Schritte: Ermitteln (102) eines Übertragungszustands wenigstens eines ermittelten Teilnehmers, vorzugsweise mehrerer oder aller ermittelten Teilnehmer, für den wenigstens einen ermittelten Teilnehmer, vorzugsweise für die mehreren oder alle ermittelten Teilnehmer, Ermitteln (104) einer zweiten Sammlung (S2) von möglichen Nachrichten, die durch den wenigstens einen bzw. mehrere, vorzugsweise alle, der ermittelten Teilnehmer (210, 212, 214, 216) über das Kommunikationsmedium (202) aussendbar sind, in Abhängigkeit des jeweiligen Übertragungszustands des betreffenden ermittelten Teilnehmers, wobei insbesondere das Auswerten (130) der ermittelten Nachrichten in Abhängigkeit der zweiten Sammlung (S2) ausgeführt wird.

3. Verfahren nach Anspruch 2, wobei die zweite Sammlung (S2), vorzugsweise wiederholt, aktualisiert (104') wird, wobei insbesondere die zweite Sammlung (S2) a) periodisch und/oder b) in Abhängigkeit eines, vorzugsweise aktuellen, Übertragungszustands des wenigstens einen ermittelten Teilnehmers und/oder c) in Abhängigkeit wenigstens einer ermittelten Nachricht aktualisiert (104') wird.

4. Verfahren nach wenigstens einem der Ansprüche 2 bis 3, wobei das Auswerten (130) umfasst: Überprüfen (132), ob in den ermittelten Nachrichten wenigstens eine Nachricht enthalten ist, die nicht in der zweiten Sammlung (S2) enthalten ist.

5. Verfahren nach wenigstens einem der vorstehenden Ansprüche, wobei das Auswerten (130) der ermittelten Nachrichten umfasst: Ermitteln (134) einer Frequenz der von wenigstens einem bestimmten ermittelten Teilnehmer ausgesendeten Nachrichten.

6. Verfahren nach Anspruch 5, wobei das Auswerten (130) der ermittelten Nachrichten weiter umfasst: Vergleichen (134') der ermittelten Frequenz mit einer für den bestimmten ermittelten Teilnehmer vorgebeben Frequenz, und optional Einleiten einer Fehlerreaktion (134") dann, wenn die ermittelte Frequenz nicht mit der für den bestimmten ermittelten Teilnehmer vorgebeben Frequenz übereinstimmt.

7. Verfahren nach wenigstens einem der Ansprüche 5 bis 6, wobei das Auswerten (130) weiter umfasst: Überprüfen (136), ob die ermittelte Frequenz einen vorgebbaren ersten Schwellwert unterschreitet und/oder einen vorgebbaren zweiten Schwellwert überschreitet und/oder identisch Null ist, und optional Einleiten einer Fehlerreaktion (136') dann, wenn die ermittelte Frequenz den vorgebbaren ersten Schwellwert unterschreitet und/oder den vorgebbaren zweiten Schwellwert überschreitet und/oder identisch Null ist.

8. Verfahren nach wenigstens einem der vorstehenden Ansprüche, aufweisend die folgenden Schritte: Prüfen (704), ob in den ermittelten Nachrichten alle von einem bestimmten Teilnehmer aussendbaren Nachrichten enthalten sind, Schließen (710) auf einen Manipulationsversuch, sofern nicht alle von dem bestimmten Teilnehmer aussendbaren Nachrichten in den ermittelten Nachrichten enthalten sind, insbesondere Schließen (710) auf einen Manipulationsversuch, sofern nicht alle von dem bestimmten Teilnehmer aussendbaren Nachrichten innerhalb einer vorgebbaren Wartezeit in den ermittelten Nachrichten enthalten sind.

9. Verfahren nach wenigstens einem der vorstehenden Ansprüche, aufweisend die folgenden Schritte: Prüfen, ob in den ermittelten Nachrichten von einem bestimmten Teilnehmer aussendbare Nachrichten enthalten sind, Schließen auf einen Manipulationsversuch, sofern manche, aber nicht alle von dem bestimmten Teilnehmer aussendbaren Nachrichten in den ermittelten Nachrichten enthalten sind.

10. Vorrichtung (300; 300a) zur Überwachung einer Datenkommunikation in einem mehrere Teilnehmer (210, 212, 214, 216) aufweisenden Kommunikationssystem (200), das ein von den Teilnehmern (210, 212, 214, 216) gemeinsam nutzbares Kommunikationsmedium (202) aufweist, wobei die Vorrichtung (300; 300a) zur Ausführung der folgenden Schritte ausgebildet ist: Ermitteln (100) der Teilnehmer (210, 212, 214, 216) des Kommunikationssystems (200), Bilden (110) einer ersten Sammlung (S1) von möglichen Nachrichten, die durch wenigstens einen der ermittelten Teilnehmer (210, 212, 214, 216) über das Kommunikationsmedium (202) aussendbar sind, Ermitteln (120) von über das Kommunikationsmedium (202) ausgesendeten Nachrichten, Auswerten (130) der ermittelten Nachrichten.

11. Vorrichtung (300; 300a) nach Anspruch 10, wobei die Vorrichtung (300; 300a) zur Ausführung des Verfahrens nach wenigstens einem der Ansprüche 2 bis 9 ausgebildet ist.

12. Teilnehmer (210) für ein Kommunikationssystem (200), das ein von mehreren Teilnehmern (210, 212, 214, 216) gemeinsam nutzbares Kommunikationsmedium (202) aufweist, wobei der Teilnehmer (210) wenigstens eine Vorrichtung (300; 300a) nach wenigstens einem der Ansprüche 10 bis 11 aufweist.

13. Kommunikationssystem (200), das ein von mehreren Teilnehmern (210, 212, 214, 216) gemeinsam nutzbares Kommunikationsmedium (202) aufweist und wenigstens einen Teilnehmer (210) nach Anspruch 12 und/oder wenigstens eine Vorrichtung (300; 300a) nach wenigstens einem der Ansprüche 10 bis 11, wobei insbesondere das Kommunikationssystem (200) als CAN-System oder CAN-FD-System ausgebildet ist.

14. Verwendung des Verfahrens nach wenigstens einem der Ansprüche 1 bis 9 und/oder der Vorrichtung (300; 300a) nach wenigstens einem der Ansprüche 10 bis 11 und/oder des Teilnehmers (210) nach Anspruch 12 und/oder des Kommunikationssystems (200) nach Anspruch 13 zur Überprüfung eines bzw. des Kommunikationssystems (200) auf einen Fehler und/oder auf eine Manipulation wenigstens eines Teilnehmers (210, 212, 214, 216) hin.
